# EUROPEAN PATENT SPECIFICATION

(11) **EP 1 454 782 B1**
(45) Date of publication and mention of the grant of the patent: **03.05.2006**
(21) Application number: 03005110.6
(22) Date of filing: 07.03.2003
(51) Int. Cl.: B60J 5/10

(54) **Motor-vehicle having a rear door which can be opened in a reduced space**
Kraftfahrzeug mit Heckklappe, die in beschränktem Raum geöffnet werden kann
Véhicule avec un hayon qui peut être ouvert dans un espace limité

(43) Date of publication of application: 08.09.2004
(73) Proprietor: C.R.F. Società Consortile per Azioni, 10043 Orbassano (Torino) (IT)
(72) Inventor: Basiletti, Sonia, 10043 Orbassano (Torino) (IT); Fuganti, Antonio, 10043 Orbassano (Torino) (IT); Masoero, Giorgio, 10043 Orbassano (Torino) (IT); Monaco, Marco, 10043 Orbassano (Torino) (IT)
(74) Representative: Notaro, Giancarlo

(56) References cited:
- DE-A- 19 639 661
- FR-A- 2 782 974
- GB-A- 2 264 533
- US-B1- 6 386 613
- PATENT ABSTRACTS OF JAPAN vol. 1997, no. 12, 25 December 1997 (1997-12-25) & JP 09 220934 A (MITSUBISHI MOTORS CORP), 26 August 1997 (1997-08-26)

## Description

The present invention relates to motor vehicles and, in particular, to motor vehicles of the type of claim 1 (see FR 2 782 974 A).

The purpose of the present invention is to provide a motor vehicle of the type referred to above, in which the rear door may be opened in a reduced space. In particular, the purpose of the invention is to ensure that, during the manoeuvre of opening the rear door, the latter will move along a path that does not project or projects only minimally from the rear part of the motor vehicle, thus enabling opening and closing of the rear door even when the rear part of the motor vehicle is at a short distance from an external body, such as, for instance, another motor vehicle, a wall, a sign post or the like.

In order to achieve said purpose, the subject of the invention is a motor vehicle having the features of claim 1.

The invention will now be described with reference to the annexed drawings, which are provided purely by way of non-limiting example, and in which:
- Figure **1** is a schematic side view of the rear part of a motor vehicle according to the invention, which illustrates the opening path of the rear door as compared with that of a rear door of a traditional type;
- Figures **2** to **5** are schematic views corresponding to that of Figure 1, which illustrate four different operating positions of the rear door; and
- Figure **6** is a perspective view which illustrates the rear door in the condition of complete opening.

With reference to the drawings, the reference number 1 designates as a whole a motor vehicle comprising a body 2 open at the rear, associated to which is a rear door 3. The details of construction of the body 2 and of the rear door 3 are not illustrated herein, since they can be made in any known way and since, in themselves, they do not fall within the scope of the invention.

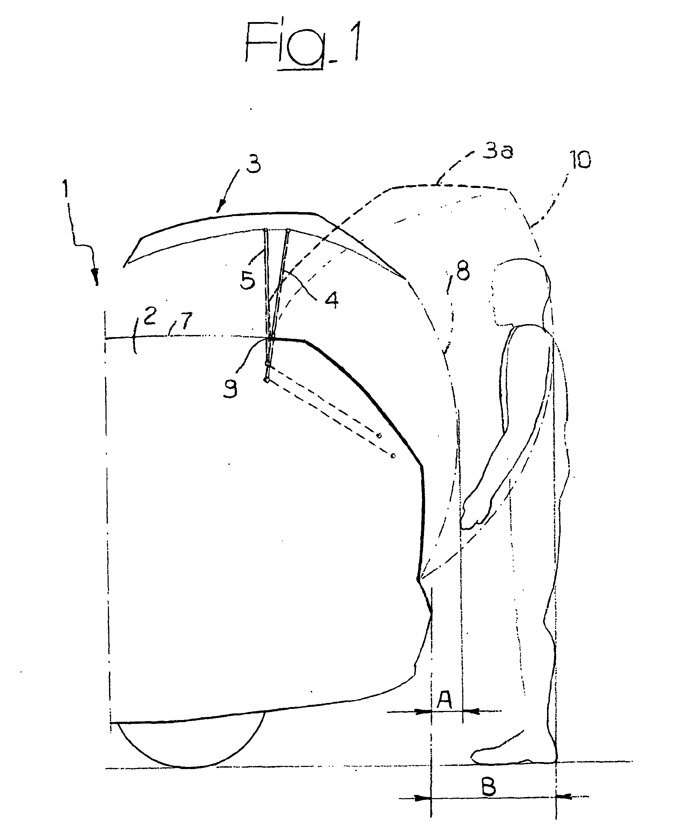

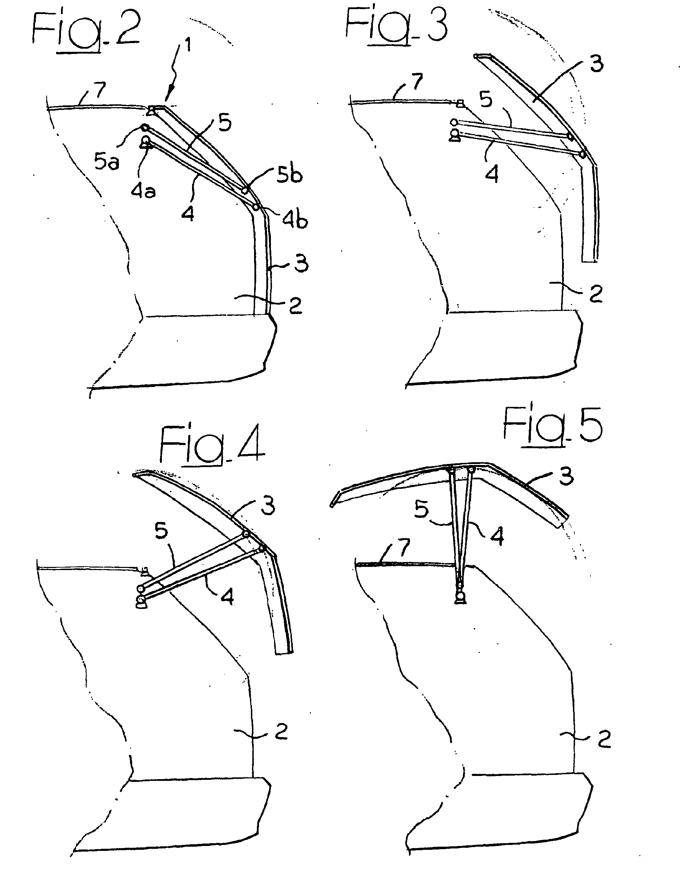

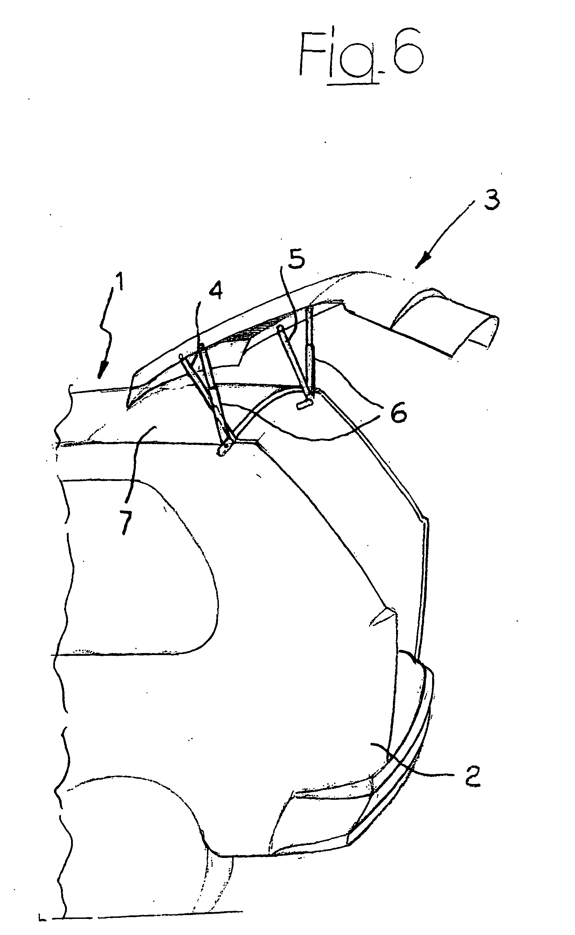

With reference to Figures 1 to 5, the structure of the rear door 3 is connected in an articulated way to the structure of the body 2 by means of an articulated quadrilateral made up of two arms 4, 5 having ends 4a, 5a mounted in an articulated way, in any known manner, on the body 2 and ends 4b, 5b connected in an articulated way, in any known manner, to the structure of the rear door 3. The position of the axes 4a, 4b, 5a, 5b and the length of the arms 4, 5 are chosen in such a way that, during the manoeuvres of opening and closing, the rear door assumes the different positions illustrated in Figures 1-5. As can be seen in Figure 6, the two arms 4, 5 of the articulated quadrilateral are set on two different sides of the rear door 3 and of the body 2, while two gas-operated springs 6 are further provided, set between the body 2 and the rear door 3 so as to assist the opening manoeuvre by supporting part of the weight of the rear door.

As appears clearly from Figures 1, 5 and 6, in the position of complete opening, the rear door 3 comes to be partially above and at a distance from the roof 7 of the body 2.

As may further be seen in Figure 1, during the opening manoeuvre the line of maximum encumbrance of the rear door, designated by the reference number 8, projects by a minimal amount A from the rear part of the motor vehicle, in the longitudinal direction. This enables the manoeuvres of opening and closing to be carried out even when the motor vehicle is parked near an obstacle or another motor vehicle. The advantage of such an arrangement as compared to the traditional solution appears clearly in Figure 1. Figure 1 shows, in fact, again schematically, a rear door 3a of the traditional type (indicated by the dashed line), which is articulated about an axis 9 to the body 2 and describes a path 10 during the opening manoeuvre that projects with respect to the rear part of the motor vehicle by a decidedly considerable amount B.

In the opening position, the bottom edge of the rear door (3) is in a longitudinal position, which is substantially equal to that of the rear edge of the rear compartment of the body or is slightly set back with respect to the body itself so as to shelter the compartment of the body in the event of rain.

Of course, without prejudice to the principle underlying the invention, the details of construction and embodiments may vary widely with respect to what is described and illustrated herein purely by way of example, without thereby departing from the scope of the present invention.

## Claims

1. A motor vehicle comprising a body (2) open at the rear and a rear door (3), which is articulated to the body (2) at the top thereof and can be manoeuvred between a lowered closing position and a raised opening position,
wherein said rear door (3) is connected to the body (2) by means of an articulated quadrilateral (4, 5), which includes at least one first arm (4) and one second arm (5) having their ends (4a, 4b, 5a, 5b) articulated to the body (2) and to the rear door (3), said quadrilateral being shaped and arranged in such a way that, during the opening manoeuvre, the rear door does not project to a substantial degree in the longitudinal direction from the rear part of the body (2) and in such a way that, in the opening position, the rear door (3) is at least partially above and at a distance from the roof (7) of the motor vehicle,
**characterized in that** in the closed condition of said rear door (3) said first and second arms (4,5) are substantially parallel to each other, with their ends (4a,5a) articulated to the body around horizontal axes which are vertically superimposed above each other, and **in that** said arms (4,5) remain of constant length during their movements between the closed and opened conditions of said rear door (3), and
**in that** the two aforesaid arms (4, 5), which constitute the aforesaid articulated quadrilateral are diverging from each other in the opened condition of the rear door (3).

2. The motor vehicle according to Claim 1, **characterized in that** provided between the body (2) and the rear door (3) are elastic means (6), which are designed to assist the manoeuvre of opening the rear door.

3. The motor vehicle according to Claim 2, **characterized in that** the aforesaid elastic means are made up of two gas cylinders, which are set at the two sides of the rear door (3) and of the body (2) and have their ends articulated to the body (2) and the rear door (3), respectively.

4. The motor vehicle according to Claim 1, **characterized in that**, in the opening position, the bottom edge of the rear door (3) is in a longitudinal position substantially equal to that of the rear edge of the rear compartment of the body or is slightly set back with respect to the latter so as to shelter the compartment of the body in the event of rain.

## Patentansprüche

1. Motorfahrzeug, umfassend einen Körper (2) offen an der Hinterseite, und eine rückwärtige Tür (3), welche am Körper (2) an dessen Oberseite angelenkt ist und manövriert werden kann zwischen einer abgesenkten Verschlussposition und einer angehobenen geöffneten Position,
worin die rückwärtige Tür (3) mit dem Körper (2) mittels eines ein Gelenk bildendes Vierecks (4, 5) verbunden ist, welches wenigstens einen ersten Arm (4) und einen zweiten Arm (5) enthält, deren Enden (4a, 4b, 5a, 5b) am Körper (2) und an der rückwärtigen Tür (3) angelenkt sind, wobei das Viereck auf eine solche Weise ausgebildet und angeordnet ist, dass während des Öffnungsmanövers die rückwärtige Tür nicht zu einem wesentlichen Grad in der longitudinalen Richtung vom hinteren Teil des Körpers (2) vorspringt, und derartig, dass in der geöffneten Position die rückwärtige Tür (3) sich wenigstens teilweise oberhalb und in einem Abstand von dem Dach (7) des Motorfahrzeugs befindet,
**dadurch gekennzeichnet, dass** im geschlossenen Zustand der rückwärtigen Tür (3) die ersten und zweiten Arme (4, 5) im Wesentlichen parallel zueinander sind, wobei ihre Enden (4a, 5a) am Körper um horizontale Achsen herum angelenkt werden, welche vertikal einander überlagert sind, und dass diese Arme (4, 5) in konstanter Länge verbleiben während ihrer Bewegungen zwischen den geschlossenen und geöffneten Zuständen der rückwärtigen Tür (3), und dass die zwei voranstehenden Arme (4, 5), welche das voranstehende angelenkte Viereck aufbauen, im geöffneten Zustand der rückwärtigen Tür (3) voneinander divergieren.

2. Motorfahrzeug nach Anspruch 1, **dadurch gekennzeichnet, dass** zwischen dem Körper (2) und der rückwärtigen Tür (3) elastische Mittel (6) bereitgestellt sind, welche dazu entworfen sind, das Öffnungsmanöver der rückwärtigen Tür zu unterstützen.

3. Motorfahrzeug nach Anspruch 2, **dadurch gekennzeichnet, dass** die voranstehenden elastischen Mittel aufgebaut werden aus zwei Gaszylindem, welche an den zwei Seiten der rückwärtigen Tür (3) und des Körpers (2) angelegt sind, und deren Enden jeweils am Körper (2) und der rückwärtigen Tür (3) angelenkt sind.

4. Motorfahrzeug nach Anspruch 1, **dadurch gekennzeichnet, dass** in der geöffneten Position die Unterkante der rückwärtigen Tür (3) sich in einer longitudinalen Position befindet, die im Wesentlichen gleich jener ist der hinteren Kante des hinteren Abteils des Körpers oder leicht zurückversetzt ist in Bezug auf die letztere, um das Abteil des Körpers im Falle von Regen zu schützen.

## Revendications

1. Véhicule à moteur comprenant une caisse (2) ouverte à l'arrière et un hayon (3), qui est articulé sur la caisse (2) au niveau de sa partie supérieure et peut être manoeuvré entre une position de fermeture abaissée et une position d'ouverture levée,
dans lequel ledit hayon (3) est raccordé à la caisse (2) au moyen d'un quadrilatère articulé (4, 5) qui comprend au moins un premier bras (4) et un second bras (5) ayant leurs extrémités (4a, 4b, 5a, 5b) articulées par rapport à la caisse (2) et par rapport au hayon (3), ledit quadrilatère étant formé et agencé de sorte que, pendant la manoeuvre d'ouverture, le hayon ne fais pas saillie, d'un degré sensible, dans la direction longitudinale à partir de la partie arrière de la caisse (2) et de sorte que, dans la position d'ouverture, le hayon (3) est au moins partiellement au dessus et à une certaine distance du toit (7) du véhicule à moteur,
**caractérisé en ce que** dans la condition fermée dudit hayon (3), lesdits premier et second bras (4, 5) sont sensiblement parallèles entre eux, avec leurs extrémités (4a, 5a) articulées par rapport à la caisse autour d'axes horizontaux qui sont verticalement superposés l'un au dessus de l'autre, et **en ce que** lesdits bras (4, 5) restent de longueur constante pendant leurs mouvements entre les conditions fermée et ouverte dudit hayon (3), et
**en ce que** lesdits deux bras (4, 5) mentionnés précédemment, qui constituent ledit quadrilatère articulé mentionné précédemment, divergent l'un de l'autre dans la condition ouverte du hayon (3).

2. Véhicule à moteur selon la revendication 1, **caractérisé en ce que** l'on prévoit entre la caisse (2) et le hayon (3) des moyens élastiques (6) qui sont conçus pour assister la manoeuvre d'ouverture du hayon.

3. Véhicule à moteur selon la revendication 2, **caractérisé en ce que** les moyens élastiques mentionnés précédemment sont composés de deux vérins hydrauliques, qui sont disposés des deux côtés du hayon (3) et de la caisse (2) et dont leurs extrémités sont articulées par rapport à la caisse (2) et au hayon (3), respectivement.

4. Véhicule à moteur selon la revendication 1, **caractérisé en ce que**, dans la position d'ouverture, le bord inférieur du hayon (3) est dans une position longitudinale sensiblement identique à celle du bord arrière du compartiment arrière de la caisse ou est légèrement disposé à l'arrière par rapport à cette dernière afin d'abriter le compartiment de la caisse en cas de pluie.
